# EUROPEAN PATENT APPLICATION

(11) **EP 4 718 602 A1**
(43) Date of publication of application: **01.04.2026**
(21) Application number: 25181877.9
(22) Date of filing: 10.06.2025
(51) Int. Cl.: H01M 50/209, H01M 50/242, H01M 50/244, H01M 50/291

(54) **BEAM STRUCTURE, BATTERY BOX BODY, AND BATTERY PACK**

(30) Priority: 13.09.2024 CN 202411292081; 24.01.2025 WO PCT/CN2025/074727
(71) Applicant: Eve Energy Co., Ltd., Huizhou, Guangdong 516006 (CN)
(72) Inventor: XU, Dehong, Huizhou, Guangdong, 516006 (CN); YANG, Shao, Huizhou, Guangdong, 516006 (CN)
(74) Representative: Berggren Oy

(57) **Abstract**

A beam structure, being configured for a battery pack, comprising an expansion-resistant beam (310), a first side of the expansion-resistant beam (310) being configured to abut against a battery cell of the battery pack; and a frame beam (320) being connected to a second side of the expansion-resistant beam (310), the frame beam (320) being located at a outermost side of a box body of the battery pack to serve as a side frame of the box body; wherein the expansion-resistant beam (310) and the frame beam (320) are integrally arranged.

## Description

### TECHNICAL FIELD

The present application relates to the field of batteries, and in particular to a beam structure, a battery box body, and a battery pack.

### BACKGROUND

In the related art, an expansion-resistant beam and a frame beam are usually welded to a battery box body separately, so that in a case that a battery cell expands, the expansion-resistant beam deforms to offset an expansion force of the battery cell, while not affecting an effect of the frame beam for sealing the battery box body.

### SUMMARY

The above structure often has the following problems. The expansion-resistant beam and the frame beam occupy a large volume, resulting in a small available space in the battery box body.

To this end, the present application adopts the following technical solutions.

In a first aspect, embodiments of the present application provide a beam structure configured for a battery pack, which includes an expansion-resistant beam, in which a first side of the expansion-resistant beam is configured for abutting against a battery cell of the battery pack; and a frame beam connected to a second side of the expansion-resistant beam, in which the frame beam is located at a outermost side of a box body of the battery pack to serve as a side frame of the box body; in which the expansion-resistant beam and the frame beam are integrally arranged.

In a second aspect, the embodiments of the present application provide a battery box body, including a top cover, two first side plates, a second side plate and a beam structure as in the first aspect, in which the two first side plates are arranged opposite to each other, the second side plate is arranged opposite to the beam structure and connected between the two first side plates, the beam structure, the two first side plates, and the second side plate enclose an accommodating cavity, and the top cover closes the accommodating cavity.

In a third aspect, the embodiments of the present application provide a battery pack, including a battery box body as in the second aspect and a plurality of battery cells located in the accommodating cavity, in which a side face, with a largest area, of each of the battery cells faces the expansion-resistant beam.

A beam structure provided in the present application includes an expansion-resistant beam and a frame beam. A first side of the expansion-resistant beam is configured for abutting against a battery cell of the battery pack, the frame beam connected to a second side of the expansion-resistant beam, and the frame beam is located at a outermost side of a box body of the battery pack to serve as a side frame of the box body, in which the expansion-resistant beam and the frame beam are integrally arranged. In the beam structure provided in the present application, the expansion-resistant beam and the frame beam are integrally arranged, which not only distribute an expansion force generated by the battery cell and serve as the side frame of the battery box body to enclose a sealing space, but also occupy a smaller volume of the beam structure with the expansion-resistant beam and the frame beam integrally arranged, so that an available space of the battery box body is larger. In addition, the frame beam assists the expansion-resistant beam in resisting expansion.

A battery box body provided in the present application has all the advantages of the beam structure as described above.

A battery pack provided in the present application has all the advantages of the battery box body as described above.

### BRIEF DESCRIPTION

FIG. 1 is a schematic diagram of a structure of a battery pack provided in an embodiment of the present application;
FIG. 2 is an explosion diagram of FIG. 1;
FIG. 3 is a side view of a structure of a lower part of a box body provided in an embodiment of the present application;
FIG. 4 is a partially enlarged schematic diagram of a structure at position A in FIG. 3;
FIG. 5 is a schematic diagram of a structure of a beam structure in FIG. 4; and
FIG. 6 is a side view of a structure of a beam structure in FIG. 5.

Reference numerals in the accompany drawings:
100: battery box body; 200: battery module; 300: beam structure; 310: expansion-resistant beam; 311: bottom plate; 312: abutting side plate; 313: inclined side plate; 314: first connecting plate; 315: second connecting plate; 316: top plate; 320: frame beam; 321: frame plate; 322: sealing plate; 330: connecting rib; 341: first notch portion; 342: second notch portion.

### DETAILED DESCRIPTION OF THE EMBODIMENTS

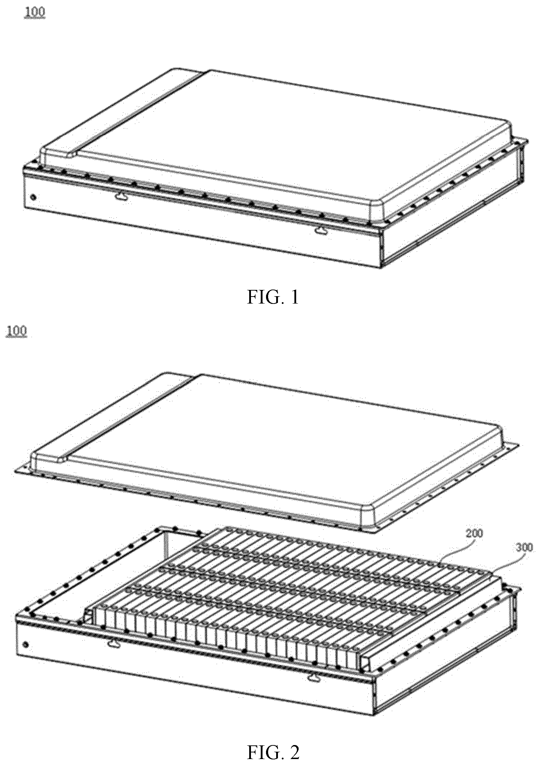

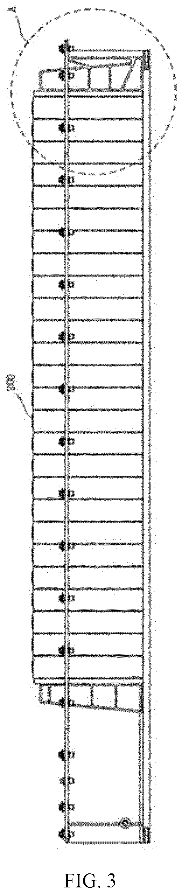

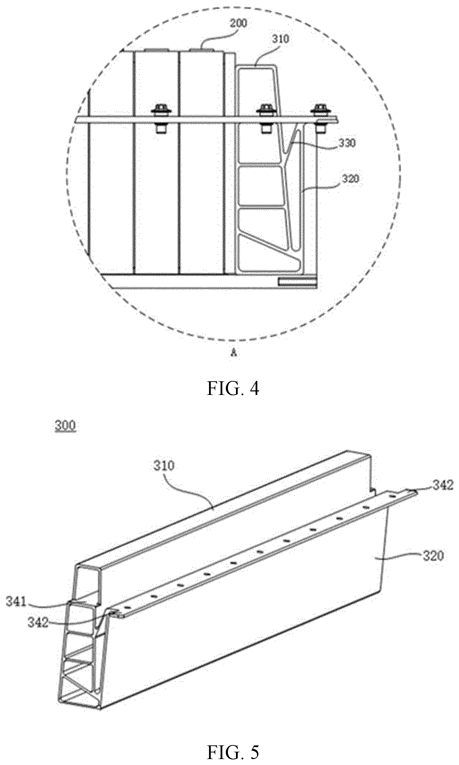

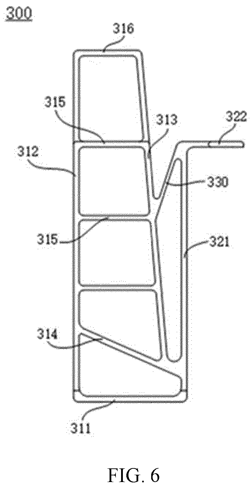

Please refer to FIG. 1 to FIG. 6. FIG. 1 is a schematic diagram of a structure of a battery pack provided in an embodiment of the present application; FIG. 2 is an explosion diagram of FIG. 1; FIG. 3 is a side view of a structure of a lower part of a box body provided in an embodiment of the present application; FIG. 4 is a partially enlarged schematic diagram of a structure at position A in FIG. 3; FIG. 5 is a schematic diagram of a structure of a beam structure in FIG. 4; and FIG. 6 is a side view of a structure of a beam structure in FIG. 5.

In order to solve the problem that the expansion-resistant beam and the frame beam occupy a large volume, resulting in a small available space in the battery box body, the embodiments of the present application provide a beam structure 300 configured for a battery pack. Please refer to FIG. 1 to FIG. 4. A battery module 200 is arranged in the battery box body 100. The beam structure 300 provided in the embodiments of the present application is located on a side of the battery module 200, and a side of the beam structure 300 abuts against the battery module 200, which is configured to offset an expansion force generated by a battery cell in the battery module 200 in a case that the battery cell expands.

Specifically, please refer to FIG. 4, FIG. 5 and FIG. 6. The beam structure 300 provided in the embodiment of the present application includes an expansion-resistant beam 310 and a frame beam 320. A first side of the expansion-resistant beam 310 abuts against the battery cell in the battery box body 100, so that in a case that the battery cell expands, the expansion-resistant beam 310 deforms to offset the expansion force generated by the battery cell. The frame beam 320 is connected to a second side of the expansion-resistant beam 310. The frame beam 320 is located at an outermost side of the battery box body 100 to serve as a side frame of the battery box body 100, so as to cooperate with first side plates and a second side plate of the battery box body 100 to enclose an accommodating cavity so as to accommodate the battery module 200 and other components. The expansion-resistant beam 310 and the frame beam 320 are integrally arranged.

Specifically, in a case that the battery cell is in a charging state, a side of the battery cell would be deformed due to a pressure generated by internal gas release or a chemical reaction, thereby causing a volume of the battery cell to increase. This increase in volume would cause the battery cell to generate a certain expansion force on a component abut against to the battery cell. In order to cope with this expansion force, the battery box body 100 provided in the embodiments of the present application introduces an expansion-resistant beam 310 in a design. The expansion-resistant beam 310 effectively distribute and buffer the expansion force generated by the battery cell through structural characteristics of the expansion-resistant beam. This design effectively prevents the battery box body 100 from being weakened in sealing or structurally damaged due to an expansion of the battery cell, so as to ensure a normal operation of a battery system. The design of the expansion-resistant beam 310 not only enhances a structural strength and a stability of the battery box body 100, but also reduces the risks caused by excessive deformation of the battery cell, thereby significantly improving an overall reliability and a safety of the battery box body 100 and ensuring the stability of the battery box body 100 during long-term use.

In this embodiment, the expansion-resistant beam 310 and the frame beam 320 are designed to be integrally arranged. This integrated design not only effectively offset the expansion force generated by the battery cell, but the frame beam 320 also serves as the side frame of the battery box body 100 to enclose a sealing space. Since the expansion-resistant beam 310 and the frame beam 320 are integrated, a volume of the beam structure 300 is relatively small, so an available internal space of the battery box body 100 is increased. In addition, this integrated design eliminates steps of welding the expansion-resistant beam 310 and the frame beam 320 to the battery box body 100, respectively, thereby reducing processing difficulty and manufacturing cost. A reduction in the number of welding times means that the number of weld seams produced by welding is relatively small, which reduces a risk of insufficient airtightness caused by the weld seams, and further improves an overall sealing and the reliability of the battery box body 100.

In some embodiments, please refer to FIG. 5 and FIG. 6. The expansion-resistant beam 310 provided in the embodiments of the present application includes a bottom plate 311, an abutting side plate 312, and an inclined side plate 313. The abutting side plate 312 and the inclined side plate 313 are arranged opposite to each other and are respectively connected to two ends of the bottom plate 311. The abutting side plate 312 is connected to an end, close to the battery cell, of the bottom plate 311 and abuts against the battery cell. The inclined side plate 313 is connected to an end, away from the battery cell, of the bottom plate 311, and an angle between the inclined side plate and the bottom plate 311 is less than 90°.

Specifically, the expansion-resistant beam 310 is configured to include an abutting side plate 312, an inclined side plate 313 and a bottom plate 311. The abutting side plate 312 directly abuts against the battery cell, so that in a case that the battery cell expands, the expansion-resistant beam 310 effectively offsets the expansion force generated by the battery cell. In order to further enhance the stability and performance of the expansion-resistant beam 310, the angle between the inclined side plate 313 and the bottom plate 311 is configured to be less than 90°, that is, a side face, facing away from the battery cell, of the expansion-resistant beam 310 is inclined relative to the bottom plate 311. This design effectively reduces the deformation of the expansion-resistant beam 310 during the expansion of the battery cell. A design of an inclination angle of the inclined side plate 313 contributes to distribute the force generated by the expansion of the battery cell, thereby reducing a direct pressure generated by the battery cell on the expansion-resistant beam 310. Since the angle is less than 90°, it is better for the expansion-resistant beam 310 to distribute and absorb the expansion force in a case that the expansion-resistant beam is subjected to the expansion force, reducing a local stress concentration. Therefore, this structural design makes a structure of the expansion-resistant beam 310 more stable, and effectively maintains a structural stability of the battery box body 100, ensuring that the battery cell would not cause excessive pressure and potential damage to the battery box body 100 in a case that the battery cell expands.

In some embodiments, a bottom of the frame beam 320 is connected to the bottom plate 311 to ensure the structural strength of the beam structure 300, and at least a part of a projection of the frame beam 320 on a bottom of the box body is located in the bottom plate 311. The projection of the frame plate 321 of this embodiment is located in the bottom plate 311, which reduces an occupied area of the beam structure and makes the structure more compact.

In some embodiments, referring to FIG. 6, the expansion-resistant beam 310 provided in the embodiments of the present application further includes a first connecting plate 314. A first side of the first connecting plate 314 is connected to the abutting side plate 312, and a second side of the first connecting plate 314 is connected to the frame beam 320. A bottom of the inclined side plate 313 is connected to the first connecting plate 314, and a connecting position between the inclined side plate 313 and the first connecting plate 314 is connected to the first connecting plate 314, that is, the bottom of the inclined side plate 313 is connected to the first connecting plate 314, and the second side, away from the abutting side plate 312, of the first connecting plate 314 is bent and connected to the bottom plate 311 of the expansion-resistant beam 310. The connecting position between the inclined side plate 313 and the first connecting plate 314 is located between the first side of the first connecting plate 314 and the second side of the first connecting plate 314, and is close to the second side of the first connecting plate 314.

Specifically, the expansion-resistant beam 310 further includes a top plate 316 arranged opposite to the bottom plate 311. One end of the top plate 316 is connected to the abutting side plate 312, and another end of the top plate is connected to the inclined side plate 313. In order to improve an expansion-resistant capability of the expansion-resistant beam 310, a size of the top plate 316 needs to be configured to be smaller than a size of the bottom plate 311. This design makes the inclined side plate 313 present a certain inclination angle relative to the abutting side plate 312, which contributes to effectively distribute the force generated by the expansion of the battery cell. In addition, the connection position of the inclined side plate 313 and the first connecting plate 314 is configured to be close to the second side of the first connecting plate 314, which further enhances the structural stability of the expansion-resistant beam 310. This design optimizes a distribution of force, so that the expansion-resistant beam 310 bears and distributes the force more uniformly in a case that the battery cell expands, reducing the deformation of the beam structure 300 caused by excessive local pressure. Overall, this structural design ensures the stability and reliability of the structure of the battery box body 100 in a case that the battery cell is in working state.

In addition, the expansion-resistant beam 310 provided in the embodiments of the present application further includes a plurality of second connecting plates 315 located on the first connecting plate 314, and the plurality of second connecting plates 315 are connected between the abutting side plate 312 and the inclined side plate 313, and the second connecting plates 315 are configured between the abutting side plate 312 and the inclined side plate 313 to enclose a plurality of cavity structures. An arrangement of these cavity structures effectively distributes the expansion force uniformly in an entire structure of the expansion-resistant beam 310. Specifically, the plurality of second connecting plates 315 are arranged regularly or in a staggered manner to ensure that sizes and shapes of the cavity structures reasonably distribute the expansion force. In a case that the battery cell expands, the expansion force would be distributed to various parts of the expansion-resistant beam 310 through these cavity structures, so that the expansion force is no longer concentrated in a specific area, thereby reducing a concentration of local pressure. This structural design effectively improves the expansion-resistant capability of the expansion-resistant beam 310 and avoids a problem of structural damage to the beam structure 300 due to excessive concentration of expansion force. Through reasonable cavity distribution and design, the expansion-resistant beam 310 more uniformly withstands the force generated by the expansion of the battery cell, thereby ensuring the overall structural stability and reliability of the battery box body 100.

In some embodiments, a thickness of a connecting rib 330 is less than a thickness of the second connecting plates 315. Specifically, as a working time of the battery cell increases, the expansion force generated by the battery cell would gradually increase. In this embodiment, the thickness of the connecting rib 330 is configured to be less than the thickness of the second connecting plates 315, which ensures that in a case that the battery cell causes large extrusion force on the beam structure, the structural strength of the connecting rib 330 is not enough to withstand the extrusion force, so the connecting rib would be crushed first, so that a distance between the expansion-resistant beam 310 and the frame beam 320 is reduced to a certain extent, so as to prevent the connecting rib 330 from generating too much extrusion force on the sealing plate 322 of the frame beam 320 and the expansion-resistant beam 310 and damaging the frame beam 320 and the expansion-resistant beam 310.

**In** some embodiments, referring to FIG. 6, the first connecting plate 314 provided in the embodiments of the present application is inclined relative to the bottom plate 311, and a distance between the first side, connected to the abutting side plate 312, of the first connecting plate 314 and the bottom plate 311 is greater than a distance between the second side, connected to the frame beam 320, of the first connecting plate 314 and the bottom plate 311.

The first connecting plate 314 is configured to be inclined relative to the bottom plate 311, which significantly improves the stability of the expansion-resistant beam 310, and this inclined design effectively distributes the expansion force generated by the battery cell. Specifically, the inclination angle of the first connecting plate 314 is configured to form a certain angle with an expansion direction of the battery cell, so that in a case that the battery cell expands, the expansion force is uniformly transmitted to the abutting side plate 312 and other structures along an inclined first connecting plate 314.

In some embodiments, referring to FIG. 6, the beam structure 300 provided in the embodiments of the present application further includes a connecting rib 330. A first side of the connecting rib 330 is connected to the inclined side plate 313 of the expansion-resistant beam 310, and a second side of the connecting rib 330 is connected to the frame beam 320.

The connecting rib 330 is arranged between the inclined side plate 313 and the frame beam 320, which is mainly to improve the structural stability of the expansion-resistant beam 310 in a case that facing the expansion force of the battery cell. In a case that the battery cell withstands a large expansion force generates by the expansion-resistant beam 310, the connecting rib 330 effectively offsets a part of the expansion force and reduces the deformation caused by the expansion of the battery cell. Secondly, the connecting rib 330 distributes the expansion force inside the beam structure 300. Since the expansion force is transmitted to everywhere of the beam structure 300 through the connecting rib 330, a uniform distribution of this force significantly enhances the overall stability and structural strength of the beam structure 300. By arranging the connecting rib 330, the local stress concentration is converted into a more uniform stress distribution, avoiding a concentration of the expansion force in certain positions, so that this structural design ensures the reliability of the expansion-resistant beam 310 in a case that facing the expansion of the battery cell, reduces a risk of damage to the beam structure 300, and thus improves a safety and a durability of the entire structure.

In some embodiments, an angle between the connecting rib 330 and the inclined side plate 313 is less than 90°.

Specifically, in a case that the expansion-resistant beam 310 is subjected to the expansion force generated by the battery cell, the angle between the connecting rib 330 and the inclined side plate 313 is configured to be less than 90°. This structural design has the following advantages: an angle between the connecting rib 330 and the frame beam 320, which is inclined relative to the inclined side plate 313 of the expansion-resistant beam 310, forms an additional inclined support force, which effectively offsets a part of the expansion force, making the force on the beam structure 300 more uniform, thereby enhancing the overall structural stability. In particular, an inclined support contributes to distribute the expansion force to multiple parts of the beam structure 300, alleviates the stress concentration in local areas, and reduces a risk of local deformation of a structure.

In some embodiments, the angle between the connecting rib 330 and the inclined side plate 313 is 15° to 45°. Specifically, it has been experimentally proved that in a case that the angle between the connecting rib 330 and the inclined side plate 313 is 15° to 45°, the structural stability of the beam structure 300 is higher.

In some embodiments, the frame beam 320 is configured to include a frame plate 321 and a sealing plate 322. The frame plate 321 is mounted on the second side, away from the abutting side plate 312, of the first connecting plate 314, and forms a function of supporting a side frame of the battery pack box. A main function of the frame beam is to provide structural support to ensure the stability of the entire battery pack while protecting internal components from an external environment.

The sealing plate 322 is mounted on a top of the frame plate 321, and its design feature is to bend relative to the frame plate 321 in a direction away from the expansion-resistant beam 310. This bending design enables the sealing plate 322 to dock well with a top cover of the battery pack box to form a sealing connection area. A main function of the sealing plate 322 is to ensure that an environment inside the battery pack is effectively sealed, thereby improving the safety and durability of the battery pack. In order to achieve this sealing connection, in some embodiments, the sealing plate 322 is fixed to the battery box body 100 through bolts or other fixings.

In addition, the second side of the connecting rib 330 is connected to a connection position between the frame plate 321 and the sealing plate 322. This design enables the connecting rib 330 to provide support for the frame plate 321 and the sealing plate 322 at the same time, thereby forming a relatively stable structure. An arrangement of the connecting rib 330 contributes to distribute the force generated by the expansion of the battery cell and uniformly transfers this force to various parts of the frame beam 320, further improving the stability and durability of the entire battery pack structure.

The present application provides a beam structure 300, and the beam structure 300 includes an expansion-resistant beam 310 and a frame beam 320. A first side of the expansion-resistant beam 310 is configured for abutting against a battery cell of the battery pack, and the frame beam 320 is connected to a second side of the expansion-resistant beam 310 and served as a side frame of the battery pack box, in which the expansion-resistant beam 310 and the frame beam 320 are integrally arranged. In the beam structure 300 provided in the present application, the expansion-resistant beam 310 and the frame beam 320 are integrally arranged, which not only distribute an expansion force generated by the battery cell and serve as the side frame of the battery box body 100 to enclose a sealing space, but also occupy a smaller volume of the beam structure 300 with the expansion-resistant beam 310 and the frame beam 320 integrally arranged, so that an available space of the battery box body 100 is larger. At the same time, there is no need to weld the expansion-resistant beam 310 and the frame beam 320 to the battery box body 100 separately, which not only reduces a processing difficulty of the battery box body 100, but also reduces the number of weld seams generated by welding, thereby reducing a risk of insufficient air tightness of the weld seams.

The embodiments of the present application further provide a battery box body 100, the battery box body 100 includes the beam structure 300 as described above, two first side plates, a second side plate and a top cover, in which the two first side plates are arranged opposite to each other, the second side plate and the beam structure 300 are arranged opposite to each other and connected between the two first side plates, the beam structure 300, the first side plates, and the second side plate enclose to form an accommodating cavity, and the top cover is configured to close the accommodating cavity.

In some embodiments, at least one first notch portion 341 is formed in a side, close to the first side plates and the top cover, of the expansion-resistant beam 310, and a bottom surface of the at least one first notch portion 341 is not higher than a top surface of the first side plates. The at least one first notch portion 341 of this embodiment is configured to be clamped to the first side plates, and prevent the expansion-resistant beam 310 from interfering with the top cover.

In some embodiments, the frame beam 320 includes a frame plate 321 and a sealing plate 322, the frame plate 321 is connected to the expansion-resistant beam 310, the sealing plate 322 is connected to a side, away from the expansion-resistant beam 310, of the frame plate 321, and ends, close to the first side plates, of the sealing plate 322 is provided with a second notch portion 342, and the second notch portion 342 is clamped to the first side plates. The second notch portion 342 of this embodiment is configured to locate with the first side plates, so as to be mounted and fixed on the first side plates.

The embodiments of the present application further provide a battery pack, and the battery pack includes the battery box body 100 as described above and a plurality of battery cells located in the accommodating cavity, in which a side face, with a largest area, of each of the battery cells faces the expansion-resistant beam 310. The battery pack has all the advantages of the beam structure 300 as described above, which are not be repeated.

## Claims

1. A beam structure, being configured for a battery pack, **characterized by** comprising
an expansion-resistant beam (310), a first side of the expansion-resistant beam (310) being configured to abut against a battery cell of the battery pack; and a frame beam (320) being connected to a second side of the expansion-resistant beam (310), the frame beam (320) being located at a outermost side of a box body of the battery pack to serve as a side frame of the box body; wherein the expansion-resistant beam (310) and the frame beam (320) are integrally arranged.

2. The beam structure of claim 1, wherein the expansion-resistant beam (310) comprises a bottom plate (311), an abutting side plate (312), and an inclined side plate (313), and the abutting side plate (312) and the inclined side plate (313) are connected to the bottom plate (311) and are arranged opposite to each other; wherein the abutting side plate (312) is configured to abut against the battery cell, and an angle between the inclined side plate (313) and the bottom plate (311) is less than 90°.

3. The beam structure of claim 2, wherein a bottom of the frame beam (320) is connected to the bottom plate (311), and a projection of at least a part of the frame beam (320) on a bottom of the box body is located in the bottom plate (311).

4. The beam structure of claim 2, wherein the expansion-resistant beam (310) further comprises a first connecting plate (314), a first side of the first connecting plate (314) is connected to the abutting side plate (312), a second side of the first connecting plate (314) is connected to the frame beam (320); wherein a bottom of the inclined side plate (313) is connected to the first connecting plate (314), and a connecting position between the inclined side plate (313) and the first connecting plate (314) is located between the first side of the first connecting plate (314) and the second side of the first connecting plate (314), and is close to the second side of the first connecting plate (314).

5. The beam structure of claim 4, wherein the first connecting plate (314) is inclined relative to the bottom plate (311), and a distance between the first side of the first connecting plate (314) and the bottom plate (311) is greater than a distance between the second side of the first connecting plate (314) and the bottom plate (311).

6. The beam structure of claim 1, further comprising a connecting rib (330), a first side of the connecting rib (330) is connected to the expansion-resistant beam (310), and a second side of the connecting rib (330) is connected to the frame beam (320).

7. The beam structure of claim 6, wherein an angle between the connecting rib (330) and the expansion-resistant beam (310) is less than 90°.

8. The beam structure of claim 7, wherein the angle between the connecting rib (330) and the expansion-resistant beam (310) is 15° to 45°.

9. The beam structure of claim 6, wherein the frame beam (320) comprises a frame plate (321) and a sealing plate (322), the frame plate (321) is connected to the expansion-resistant beam (310) and is arranged at an outermost side of the box body of the battery pack, the sealing plate (322) is connected to the frame plate (321) and is bent relative to the frame plate (321) in a direction away from the expansion-resistant beam (310), and the sealing plate (322) is configured to be connected to a top cover of the box body of the battery pack; wherein the second side of the connecting rib (330) is connected to a connection position between the frame plate (321) and the sealing plate (322).

10. The beam structure of claim 6, wherein the expansion-resistant beam (310) further comprises a plurality of second connecting plates (315) located on the first connecting plate (314), the plurality of second connecting plates (315) are connected between the abutting side plate (312) of the expansion-resistant beam (310) and the inclined side plate (313) of the expansion-resistant beam (310) to enclose a plurality of cavities, and a thickness of the connecting rib (330) is less than a thickness of the second connecting plates (315).

11. A battery box body, **characterized by** comprising a top cover, two first side plates, a second side plate and the beam structure (300) of any one of claims 1 to 10, wherein the two first side plates are arranged opposite to each other, the second side plate is arranged opposite to the beam structure (300) and connected between the two first side plates, the beam structure (300), the two first side plates, and the second side plate enclose an accommodating cavity, and the top cover closes the accommodating cavity.

12. The battery box body of claim 11, wherein a side of the expansion-resistant beam (310) close to the two first side plates and the top cover is provided with at least one first notch portion (341), of the expansion-resistant beam (310), and a bottom surface of the at least one first notch portion (341) is not higher than a top surface of the two first side plates.

13. The battery box body of claim 11, wherein the frame beam (320) comprises the frame plate (321) and the sealing plate (322), the frame plate (321) is connected to the expansion-resistant beam (310), the sealing plate (322) is connected to a side of the frame plate (321) away from the expansion-resistant beam(310), and an end of the sealing plate (322) close to the two first side plates is provided with a second notch portion (342), and the second notch portion (342) is clamped to the two first side plates.

14. The battery box body of claim 11, wherein the sealing plate (322) is fixed to the battery box body (100).

15. A battery pack, **characterized by** comprising the battery box body (100) of any one of claims 11 to 14 and a plurality of battery cells located in the accommodating cavity, wherein a side face, with a largest area, of each of the battery cells faces the expansion-resistant beam (310).
